Europäisches Patentamt

European Patent Office

Office européen des brevets

(11) Veröffentlichungsnummer: **0 349 810 B1**

(12) **EUROPÄISCHE PATENTSCHRIFT**

(45) Veröffentlichungstag der Patentschrift: **01.09.93**

(51) Int. Cl.⁵: **C08F 8/14**

(21) Anmeldenummer: **89111043.9**

(22) Anmeldetag: **19.06.89**

Die Akte enthält technische Angaben, die nach
dem Eingang der Anmeldung eingereicht wurden
und die nicht in dieser Patentschrift enthalten sind.

(54) **Verfahren zur Herstellung von alkoxylierten, Carboxylgruppen enthaltenden Polymerisaten.**

(30) Priorität: **25.06.88 DE 3821518**

(43) Veröffentlichungstag der Anmeldung:
**10.01.90 Patentblatt 90/02**

(45) Bekanntmachung des Hinweises auf die
Patenterteilung:
**01.09.93 Patentblatt 93/35**

(84) Benannte Vertragsstaaten:
**AT BE CH DE ES FR GB IT LI NL SE**

(56) Entgegenhaltungen:
**EP-A- 0 200 070**
**DE-A- 12 976**
**GB-A- 1 002 343**
**US-A- 2 607 761**

(73) Patentinhaber: **BASF Aktiengesellschaft**
**Carl-Bosch-Strasse 38**
**D-67063 Ludwigshafen(DE)**

(72) Erfinder: **Denzinger, Walter**
**Wormser Landstrasse 65**
**D-6720 Speyer(DE)**
Erfinder: **Hartmann, Heinrich, Dr.**
**Weinheimer Strasse 46**
**D-6703 Limburgerhof(DE)**
Erfinder: **Baur, Richard, Dr.**
**Nelkenstrasse 1**
**D-6704 Mutterstadt(DE)**
Erfinder: **Perner, Johannes, Dr.**
**Ginsterweg 4**
**D-6730 Neustadt(DE)**
Erfinder: **Trieselt, Wolfgang, Dr.**
**Alwin Mittasch-Platz 1**
**D-6700 Ludwigshafen(DE)**
Erfinder: **Trapp, Horst, Dr.**
**Johann Sebastian Bach-Strasse 10a**
**D-6831 Plankstadt(DE)**
Erfinder: **Raubenheimer, Hans-Juergen**
**Benzstrasse 6**
**D-6834 Ketsch(DE)**

EP 0 349 810 B1

**Beschreibung**

Aus der US-PS 3 880 765 ist ein Verfahren zur Herstellung von alkoxylierten, wasserlöslichen Polymeristen der Acrylsäure bekannt. Gemäß einer in der US-PS beschriebenen Verfahrensvariante werden Polymerisate der Acrylsäure mit 2 bis 60 Gew.%, bezogen auf das eingesetzte Polymerisat, an Alkylenoxiden, vorzugsweise Ethylenoxid, in wäßrigem Medium umgesetzt. Nach Beendigung der Alkoxylierung wird das Reaktionsprodukt neutralisiert. Bei der Alkoxylierung von Polymerisaten in wärigem Medium entstehen jedoch als Nebenprodukte Glykole, die durch Reaktion der Alkylenoxide mit Wasser gebildet werden.

Aus der EP-Anmeldung 0 285 933 ist außerdem bekannt, die Additionsprodukte von Ethylenoxid, Propylenoxid oder Butylenoxiden an Carboxylgruppen enthaltende Polymerisate, die mindestens eine monoethylenisch ungesättigte $C_3$- bis $C_6$-Carbonsäure einpolymerisiert enthalten, als Zusatz zu Waschmitteln zu verwenden. Die Additionsprodukte wirken in der Waschflotte als Inkrustierungsinhibitor und als Dispergiermittel für den beim Waschen von der Wäsche abgelösten Partikelschmutz. Sie werden gemäß den Angaben in den Beispielen durch Reaktion der Alkylenoxide mit den Polymerisaten in wäßriger Lösung in Gegenwart von Thiodiglykol oder Ethylthioethanol bei pH-Werten von 0,7 bis 4,5 hergestellt. Als Nebenprodukte entstehen Alkylenglykole.

Aus der US-A-2 607 761 ist bekannt, Polymerisate monoethylenisch ungesättigter Carbonsäuren mit Alkylenoxiden in verdünnter wäßriger Lösung unter Normaldruck bei Raumtemperatur umzusetzen. Der pH-Wert der wäßrigen Copolymerisatlösungen beträgt am Beginn der Polymerisaten gemäß den Angaben in den Beispielen 0,8 bis 11,5. Sowohl bei sehr niedrigen pH-Werten als auch bei den hohen pH-Werten innerhalb des angegebenen Bereichs entstehen alkoxylierte Polycarbonsäuren, die als Nebenprodukt beträchtliche Mengen an Alkylenglykolen enthalten.

Aus der DE-A-12 976 ist bekannt, daß man einwandfrei lösliche, nicht-vernetzte Umsetzungsprodukte aus Ethylenoxid mit Polymerisaten ethylenisch ungesättigter Carbonsäuren herstellen kann, wenn man die Umsetzung bei Temperaturen oberhalb von 40°C ausführt und die Reaktion dann abbricht, sobald die Reaktionslösung einen pH-Wert von maximal 7 erreicht hat. Gemäß Beispiel 1 und den übrigen Angaben in der Beschreibung hatte sich als günstig herausgestellt, einen Anfangs-pH-Wert von mindestens 3,5 einzuhalten. Hierbei entstehen beträchtliche Mengen an Ethylenglykol.

Der vorliegenden Erfindung liegt die Aufgabe zugrunde, bei der Alkoxylierung von Carboxylgruppen enthaltenden Polymerisaten mit Alkylenoxiden in wäßrigem Medium die Bildung der als Nebenprodukte entstehenden Alkylenglykole gegenüber dem bekannten Verfahren stark zurückzudrängen.

Die Aufgabe wird erfindungsgemäß gelöst mit einem Verfahren zur Herstellung von alkoxylierten, Carboxylgruppen enthaltenden Polymerisaten durch Umsetzung von

(A) Homopolymerisaten von monoethylenisch ungesättigten $C_3$-bis $C_8$-Carbonsäuren oder Copolymerisaten, die

(a) 1 bis 99 Gew.-% mindestens einer monoethylenisch ungesättigten $C_3$- bis $C_6$-Monocarbonsäure und
(b) 99 bis 1 Gew.-% mindestens einer monoethylenisch ungesättigten $C_4$- bis $C_6$-Dicarbonsäure

mit der Maßgabe einpolymerisiert enthalten, daß die Summe der Angaben (a) und (b) im Gew.-% immer 100 beträgt, mit

(B) Ethylenoxid, Propylenoxid, n-Butylenoxid, Isobutylenoxid oder deren Gemischen

in wäßrigem Medium bei Temperaturen bis zu 120°C, dadurch gekennzeichnet, daß man die Umsetzung bei einem pH-Wert von 5,0 bis 5,9 startet und nach Erreichen eines pH-Wertes von 5,5 bis 8,5 beendet.

Als Polymerisate (A) eignen sich Homopolymerisate von monoethylenisch ungesättigten $C_3$- bis $C_6$-Carbonsäuren bzw. Copolymerisate, die mindestens 10 Gew.% einer monoethylenisch ungesättigten $C_3$- bis $C_6$-Carbonsäure einpolymerisiert enthalten. Geeignete monoethylenisch ungesättigte Carbonsäuren dieser Art sind beispielsweise Acrylsäure, Methacrylsäure, Ethacrylsäure, Vinylessigsäure, Allylessigsäure, Propylidenessigsäure, Ethlylidenpropionsäure, Mesaconsäure, Fumarsäure, Methylenmalonsäure, Citraconsäure, Maleinsäure und Itaconsäure. Vorzugsweise verwendet man von den genannten Carbonsäuren, Acrylsäure, Methacrylsäure, Maleinsäure, Fumarsäure, Itaconsäure oder deren Mischungen.

Als Polymerisate (A) kommen auch Copolymerisate in Betracht, die

(a) monoethylenisch ungesättigte $C_3$- bis $C_6$-Monocarbonsäuren und
(b) monoethylenisch ungesättigte $C_4$- bis $C_6$-Dicarbonsäuren einpolymerisiert enthalten.

Als Monomere der Gruppe (a) werden vorzugsweise Acrylsäure und/oder Methacrylsäure eingesetzt. Monomere der Gruppe (b) sind beispielsweise Maleinsäure, Itaconsäure, Mesaconsäure, Fumarsäure, Methylenmalonsäure und Citraconsäure. Vorzugsweise verwendet man aus dieser Gruppe von Monomeren Maleinsäure. Die Copolymerisate enthalten 1 bis 99 Gew.% der Monomeren der Gruppe (a) und 99 bis 1 Gew.% der Monomeren der Gruppe (b) einpolymerisiert.

Die Carboxylgruppen enthaltenden Copolymerisate können durch Einpolymerisieren von weiteren Monomeren modifiziert sein. Derartige Copolymerisate enthalten in polymerisierter Form

(a) 5 bis 40 Gew.% mindestens einer monoethylenisch ungesättigten $C_3$- bis $C_6$-Monocarbonsäure, vorzugsweise Acrylsäure und/oder Methacrylsäure,

(b) 5 bis 40 Gew.% mindestens einer monoethylenisch ungesättigten Dicarbonsäure mit 4 bis 6 C-Atomen, vorzugsweise Maleinsäure und/oder Itaconsäure

(c) 0 bis 80 Gew.% mindestens eines Hydroxy-$C_2$- bis $C_6$-Alkylesters von Mono- oder Dicarbonsäuren gemäß (a) und (b) und

(d) 0 bis 20 Gew.% mindestens eines Amids, Nitrils oder eines Esters von einwertigen 1 bis 4 C-Atome enthaltenden Alkohols von Mono-oder Dicarbonsäuren gemäß (a) und (b), Vinylacetat, Vinylproponat, Vinylphosphonsäure, Vinylsulfonat und/oder Acrylamido-2-methylpropansulfonsäure.

Die Summe der Gewichtsprozente (a) bis (d) beträgt dabei immer 100. Als Monomere (c) eignen sich beispielsweise Hydroxyethylacrylat, Hydroxyethylmethacrylat, Hydroxypropylacrylat, Hydroxypropylmethacrylat, Hydroxybutylacrylat, Hydroxybutylmethacrylat, Hydroxyhexylacrylat, Monohydroxyethylmaleinat, Dihydroxyethylmaleinat, Monohydroxypropylmaleinat, Dihydroxypropylmaleinat, Monohydroxybutylmaleinat, Dihydroxybutylmaleinat, Monohydroxyethylitaconat, Dihydroxyethylitaconat, Monohydroxypropylitaconat, Dihydroxypropylitaconat und Monohydroxybutylitaconat. Von den Hydroxyalkylestern, die sich von Diolen mit 3 bis 6 Kohlenstoffatomen ableiten, können sämtliche Isomeren verwendet werden. Vorzugsweise verwendet man als Monomer der Gruppe (c) Hydroxyethylacrylat, Hydroxyethylmethacrylat, Hydroxypropylacrylat, Hydroxybutylacrylat und Hydroxypropylmethacrylat. Falls die Monomeren der Gruppe (c) eingesetzt werden, sind sie vorzugsweise in einer Menge von 20 bis 60 Gew.% am Aufbau der Copolymerisate beteiligt.

Als Componente (d) eignen sich beispielsweise Acrylamid, Methacrylamid, Acrylnitril, Methacrylnitril, Acrylsäureester von Alkoholen mit 1 bis 4 C-Atomen, z.B. Methylacrylat, Ethylacrylat, n-Propylacrylat, Isopropylacrylat, n-Butylacrylat, Isobutylacrylat und Tertiärbutylacrylat sowie die entsprechenden Ester der Methacrylsäure sowie Monoester von Dicarbonsäuren, wie Maleinsäuremonomethylester, Maleinsäuredimethylester, Maleinsäuremonoethylester, Maleinsäuremono-n-propylester, Maleinsäure-di-iso-propylester, Maleinsäuremono-n-butylester, Maleinsäuremonosekundärbutylester, Maleinsäuredi-n-propylester, Maleinsäuredi-n-butylester und Maleinsäuredi-sekundärbutylester sowie die entsprechenden Ester der Fumarsäure und Itaconsäure, Vinylacetat, Vinylpropionat, Vinylphosphonsäure, Vinylsulfonsäure und/oder Acrylamido-2-methylpropansulfonsäure. Sofern die Copolymerisate mit Monomeren der Gruppe (d) modifiziert werden, beträgt der Anteil der Monomeren der Gruppe (d) am Aufbau der Copolymerisate bis zu 20, vorzugsweise 5 bis 15 Gew.%.

Die oben angegebenen Homo- und Copolymerisate haben Molekulargewichte (Massenmittel) von 500 bis 1 Million, vorzugsweise 10 000 bis 500 000. Anstelle des Molekulargewichts werden die Polymerisate im folgenden durch den K-Wert nach Fikentscher charakterisiert. Der K-Wert der Homo- und Copolymerisate beträgt 8 bis 200, vorzugsweise 15 bis 100. Er wird bestimmt nach H. Fikentscher in 1 %iger wäßriger Lösung bei einem pH-Wert von 7, einer Temperatur von 25°C bei einer Polymerkonzentration des Natrium-Salzes des Polymerisates von 1 Gew.%.

Die oben beschriebenen Polymerisate (A), die mindestens 10 Gew.% einer monoethylenisch ungesättigten $C_3$- bis $C_6$-Carbonsäure einpolymerisiert enthalten, werden in wäßrigem Medium mit Alkylenoxiden umgesetzt. Sie werden zu diesem Zweck vorzugsweise in einem wäßrigen Medium gelöst. Die Polymerkonzentration beträgt 5 bis 90, vorzugsweise 20 bis 70 Gew.%. Als wäßriges Medium wird vorzugsweise reines Wasser eingesetzt, z.B. von Schwebstoffen befreites Flußwasser, entsalztes Wasser oder destilliertes Wasser. Außerdem sollen darunter Mischungen aus Wasser und Lösemitteln verstanden werden, die in Wasser löslich sind, z.B. Alkohole, wie Methanol, Ethanol, n-Propanol und Isopropanol, Aceton, Dimethylformamid, Dioxan und Tetrahydrofuran. Die mit Wasser mischbaren Lösemittel werden vor allem dann eingesetzt, wenn sich die Polymerisate (A) nicht vollständig in Wasser auflösen. Selbstverständlich kann man auch Gemische organischer Lösemittel und Wasser als wäßriges Medium einsetzen. Lösemittelmischungen enthalten bis zu 50 Gew.% an organischem Lösemittel.

Die Polymerisate der Gruppe (A) werden mit den oben unter (B) angegebenen Alkylenoxiden umgesetzt. Bei diesen Alkylenoxiden handelt es sich um Ethylenoxid, Propylenoxid, n-Butylenoxid, Isobutylenoxid oder um Gemische der genannten Alkylenoxide. Die Umsetzung der Polymerisate mit den Alkylenoxiden wird in wäßrigem Medium bei Temperaturen von 5 bis 120, vorzugsweise 20 bis 80°C durchgeführt. Die Umsetzung kann bei Normaldruck oder erhöhtem Druck vorgenommen werden. Sofern die Reaktion unter erhöhtem Druck durchgeführt wird, betragen die Drücke bis zu 50 bar. Üblicherweise wird die Umsetzung bei Drücken bis zu 20 bar durchgeführt. Das Alkylenoxid bzw. eine Mischung der Alkylenoxide wird dabei an die Polymerisate angelagert. Bezogen auf die Polymerisate (A) werden 3 bis 80, vorzugsweise 4 bis 50

3

Gew.%, der unter (B) angegebenen Alkylenoxide eingesetzt.

Ausschlaggebend für die Zurückdrängung der Glykolbildung bei der Umsetzung der Carboxylgruppen enthaltenden Polymerisate mit den in Betracht kommenden Alkylenoxiden ist die Kontrolle des pH-Wertes bei der Alkoxylierung. Der pH-Wert der wäßrigen Lösung der Polymerisate - jeweils bei 20°C bestimmt - soll bei Beginn der Umsetzung 5,0 bis 5,9 und am Ende der Um setzung 5,5 bis 8,5 betragen. Er wird eingestellt durch partielle Neutralisation der Carboxylgruppen enthaltenden Polymerisate mit Basen. Geeignete Basen sind beispielsweise von Alkalimetallen abgeleitete Basen, wie Natronlauge, Kalilauge, Soda, Natriumhydrogencarbonat und Pottasche. Geeignet sind außerdem Ammoniak und Amine, z.B. $C_1$- bis $C_{18}$-Alkylamine, wie Ethylamin, Propylamin, Butylamin, Dibutylamin, Triethylamin, Hexylamin, Stearylamin, Ethanolamin, Diethanolamin, Triethanolamin und Morpholin. Sofern die Erdalkalimetallsalze der Polymerisate wasserlöslich sind, kann man zur partiellen Neutralisation der Carboxyl- bzw. $SO_3H$-Gruppen der Polymerisate auch Basen verwenden, die sich von Erdalkalimetallen ableiten, z.B. Magnesiumcarbonat und Calciumhydroxid. Manchmal ist es von Vorteil, Basengemische einzusetzen. Bevorzugt sind Natriumhydroxid und Kaliumhydroxid.

Der pH-Wert des Reaktionsgemisches wird während der Reaktion fortlaufend kontrolliert. Aufgrund der Reaktion der Alkylenoxide mit den freien Carboxylgruppen der Polymerisate zu Hydroxyalkylestergruppen steigt der pH-Wert des Reaktionsgemisches mit fortschreitendem Umsatz an. Vorzugsweise beginnt man die Alkoxylierung in dem pH-Bereich von 5,2 bis 5,9 und beendet die Umsetzung bei pH-Werten in dem Bereich von 5,6 bis 7,5. Der pH-Wert steigt im Verlauf der Umsetzung um mindestens 0,2, vorzugsweise um mindestens 0,4 Einheiten.

Eine weitere Steigerung der Selektivität der Anlagerung der Alkylenoxide an die Polymerisate (A) in wäßrigem Medium wird dadurch erreicht, daß man die Umsetzung der Polymerisate (A) und der Alkylenoxide (B) in Gegenwart von 0,5 bis 5 Gew.% bezogen auf die eingesetzten Alkylenoxide, an Thioethern oder SH-Gruppen enthaltenen Verbindungen vornimmt. Geeignete Thioether können beispielsweise mit Hilfe der allgemeinen Formel

$R-S-R^1$, in der $R, R^1$ = $C_1$- bis $C_{10}$-Alkyl, $-C_6H_5$, $-CH_2-C_6H_5$, $-CH_2-COOH$, $-CH_2-(CH_2)_n-COOH$, $-(CH_2)_nCH_2-OH$ und $n$ = 1 bis 8 ist,

charakterisiert werden. Beispiele für solche Thioether sind Dimethylsulfid, Diethylsulfid, Methylphenylsulfid, Thiodiessigsäure, Thiodibuttersäure, Ethylthioethanol und Thiodiglykol. Außerdem eignen sich Thioglykol, Thioethanol, Thioessigsäure, Thiobuttersäure und Dodecylmercaptan. Besonders bevorzugt ist die Herstellung von solchen alkoxylierten Copolymerisaten, die durch Umsetzung von

(A) Copolymerisaten, die

(a) 40 bis 90 Gew.% Acrylsäure und/oder Methacrylsäure und

(b) 60 bis 10 Gew.% Maleinsäure und/oder Itaconsäure

einpolymerisiert enthalten, wobei die Summe der Angaben (a) und (b) in Gew.% immer 100 beträgt, mit

(B) 3 bis 80, vorzugsweise 4 bis 50 Gew.%, Propylenoxid, bezogen auf (A), in Gegenwart von 0,5 bis 5 Gew.%, bezogen auf Propylenoxid, an Thiodiglykol, Thiodiessigsäure oder deren Gemischen

erhältlich sind.

Die Umsetzung wird vorzugsweise unter erhöhtem Druck vorgenommen. Man verfährt dabei so, daß man entweder einen Teil oder die gesamte Menge an Polymerisaten (A) gelöst in wäßrigem Medium im Druckbehälter vorlegt und dann einen Teil bzw. das gesamte Alkylenoxid aufpreßt. Um die Reaktionswärme gut abführen zu können, wird das Alkylenoxid portionsweise bzw. kontinuierlich in Abhängigkeit vom Fortschritt der Umsetzung zudosiert. Vorteilhaft wird während der gesamten Reaktionsdauer für eine gute Durchmischung der Komponenten gesorgt, z.B. durch Rühren. Vorzugsweise verwendet man Autoklaven, die mit einem Rührer sowie mit Heiz- und Kühleinrichtungen ausgestattet sind. Manchmal ist es vorteilhaft, das Alkylenoxid bei niedriger Temperatur zuzugeben und anschließend zur völligen Umsetzung die Temperatur zu erhöhen, beispielsweise bei 40°C das Alkylenoxid zuzudosieren und anschließend bei 80° nachreagieren zu lassen. Die Umsetzung wird vorzugsweise bei Temperaturen in dem Bereich von 20 bis 80°C durchgeführt. Nach Beendigung der Reaktion erhält man alkoxylierte Carboxylgruppen enthaltende Polymerisate, die nur geringe Mengen an Alkylenglykolen aufweisen und die in dieser Form oder nach einer Neutralisation direkt verwendet werden können. Die Umsetzungsprodukte können jedoch auch aus den wäßrigen Lösungen isoliert und in fester Form, z.B. als Pellets oder Schuppen, verwendet werden.

Die alkoxylierten Carboxylgruppen enthaltenden Polymerisate werden hauptsächlich als Zusatz zu Waschmitteln verwendet und sind darin in einer Menge von 0,1 bis 20, vorzugsweise 1 bis 15 Gew.% enthalten. Sie wirken in Waschflotten als Builder, Inkrustationsinhibitor und als Dispergiermittel für Schmutzpartikel, die von dem textilen Material abgelöst werden und sich in der Waschflotte befinden.

Die alkoxylierten, Carboxylgruppen enthaltenden Polymerisate können sowohl phosphathaltigen als auch phosphatfreien Waschmitteln zugesetzt werden. Die phosphorhaltigen Waschmittel haben einen reduzierten Phosphatgehalt von weniger als 25 Gew.% Natriumtriphosphat. Die alkoxylierten Polymerisate werden dabei in Form einer Lösung oder in Mischung mit anderen Bestandteilen, z.B. zusammen mit Stellmitteln, wie Natriumsulfat oder Gerüststoffen (Zeolithen) oder anderen Hilfsstoffen, der Waschmittelformulierung zugesetzt. Die erfindungsgemäß zu verwendenden Produkte können sowohl zu pulverförmigen Waschmitteln als auch zu flüssigen Waschmittelformulierungen zugesetzt werden. Wesentlicher Bestandteil handelsüblicher, pulverförmiger oder flüssiger Waschmittel, die entweder Natriumtriphosphat enthalten oder phosphatfrei sind, sind Tenside, z.B. $C_8$- bis $C_{12}$-Alkylphenolethoxylate, $C_{12}$- bis $C_{20}$-Alkanolethoxylate, sowie Blockcopolymerisate des Ethylenoxids und Propylenoxids. Die Tenside sind darin zu 5 bis 50 Gew.% vorhanden.

Die K-Werte der Carboxylgruppen enthaltenden Polymerisate wurden nach H. Fikentscher, Cellulosechemie, Bd. 13, 58-64 und 71-74 (1932) in wäßriger Lösung bei einer Temperatur von 25°C, einer Polymerkonzentration von 1 Gew.% des Natriumsalzes bei einem pH-Wert von 7 gemessen; dabei bedeutet $K = k \cdot 10^3$.

Beispiele

Sämtliche Umsetzungen wurden in Kesseln aus Edelstahl durchgeführt, die für das Arbeiten unter erhöhtem Druck ausgelegt und mit einem Ankerrührer ausgestattet waren. Die Kessel waren außerdem mit einer Dosiervorrichtung für Alkylenoxid ausgerüstet und waren beheizbar und kühlbar. Das Fassungsvermögen der jeweils verwendeten Kessel ist in der folgenden Tabelle angegeben. Bei den Beispielen und den Vergleichsbeispielen wurde die jeweils in der Tabelle bezeichnete wäßrige Lösung des Polymeren eingefüllt, jeweils 3 mal mit je 3 bar Stickstoff abgepreßt und auf den Kessel jeweils ein Stickstoffdruck von 1 bar gestellt. Der Kesselinhalt wurde dann unter intensivem Rühren auf 40°C erhitzt. Die Temperatur wurde konstant gehalten und Propylenoxid innerhalb von 1,5 Stunden gleichmäßig zudosiert. Nach Zugabe des Propylenoxids wurde das Reaktionsgemisch noch 1 Stunde bei der Reaktionstemperatur gerührt. Danach erhöhte man die Temperatur auf 60°C und rührte die Reaktionsmischung solange, bis der Druck auf 1 bar abgefallen war (Dauer ca. 2 Stunden). Der Autoklaveninhalt wurde dann entspannt und unter schwachem Vakuum (ca. 800 mbar) von geringfügigen Mengen an nicht umgesetztem Propylenoxid befreit.

Bei den Beispielen 1 bis 8 und Vergleichsbeispielen 1 bis 3 wurde die mit Natriumhydroxid auf den in der Tabelle angegebenen pH-Wert eingestellte wäßrige Lösung eines Copolymeren aus 70 Gew.% Acrylsäure und 30 Gew.% Maleinsäure vom K-Wert 66,2 eingesetzt. Bei Beispiel 9 wurde eine mit Natriumhydroxid eingestellte wäßrige Lösung eines Copolymeren aus 50 Gew.% Acrylsäure und 50 Gew.% Maleinsäure vom K-Wert 54,5 im Reaktor vorgelegt.

Der Feststoffgehalt der wäßrigen Lösung wurde jeweils durch Trocknen von 0,5 g des Reaktionsgemisches in einem 20 ml fassenden Wägeglas für 2 Stunden bei 150°C bestimmt.

Der Propylenglycolgehalt der Proben wurde gasgromatographisch ermittelt. Der pH-Wert der wäßrigen Lösungen wurde jeweils durch Entnahme einer Probe aus dem Reaktor mit Hilfe eines pH-Meters auf elektrischem Wege bei einer Temperatur der Probe von 20°C gemessen. Die Ergebnisse der Beispiele und Vergleichsbeispiele sind in der Tabelle zusammengestellt.

Tabelle

| Beispiel Nr. | Reaktorinhalt [l] | im Reaktor vorgelegte wäßrige Copolymerisatlösung | | pH-Wert (bei Beginn) |
| | | Menge [g] | Feststoffgehalt [Gew.%] | |
| --- | --- | --- | --- | --- |
| 1 | 6 | 3445 | 43,5 | 5,0 |
| 2 | 160 | 123400 | 43,1 | 5,2 |
| 3 | 6 | 3396 | 43,2 | 5,3 |
| 4 | 10 | 4260 | 44,0 | 5,6 |
| 5 | 160 | 128200 | 42,4 | 5,6 |
| 6 | 6 | 3554 | 42,3 | 5,9 |
| 7 | 6 | 3391 | 42,6 | 5,3 |
| 8 | 6 | 3363 | 43,2 | 5,3 |
| 9 | 6 | 4091 | 41,3 | 5,4 |
| Vergleichs-beispiel Nr. | | | | |
| 1 | 10 | 5178 | 45,3 | 3,9 |
| 2 | 10 | 3645 | 44,0 | 4,9 |
| 3 | 10 | 3841 | 43,8 | 5,9 |

Tabelle (Fortsetzung)

| Beispiel Nr. | Katalysator Thiodiglykol [g] | Propylenoxid [g] | Umsetzungsprodukt Feststoffgehalt [Gew.%] | pH-Wert (bei Ende) | Propylenglykolgehalt [Gew.% ber. auf Feststoff] | Propylenoxidanteil addiert an Copolymerisat [Gew.%] | K-Wert |
|---|---|---|---|---|---|---|---|
| 1 | 5,2 | 261,5 | 48,2 | 5,7 | 1,3 | 85,8 | 66,4 |
| 2 | 190 | 8940 | 46,1 | 6,4 | 0,48 | 94,4 | 63,2 |
| 3 | 2,5 | 127 | 45,6 | 5,6 | 0,09 | 97,5 | 66,0 |
| 4 | 6,4 | 317,4 | 46,0 | 8,4 | 0,61 | 93,2 | 64,3 |
| 5 | 190 | 8940 | 45,2 | 8,1 | 0,2 | 97,7 | 62,4 |
| 6 | 5 | 249,5 | 46,1 | 7,5 | 0,43 | 94,4 | 65,5 |
| 7 | - | 253 | 47,6 | 6,0 | 1,16 | 87,3 | 66,1 |
| 8 | 5 | 251 | 48,1 | 6,1 | 0,56 | 93,8 | 66,2 |
| 9 | 5,9 | 294 | 45,2 | 7,4 | 0,03 | 99,6 | 55,0 |
| Vergleichs- beispiel Nr. | | | | | | | |
| 1 | 633,5 | 261,5 | 49,8 | 5,0 | 3,7 | 74,3 | 66,7 |
| 2 | 400,9 | 261,5 | 48,5 | 6,0 | 3,2 | 75,3 | 65,9 |
| 3 | 387,4 | 261,5 | 46,3 | 10,5 | 2,5 | 79,2 | 63,2 |

Bei Beispiel 8 betrug die Reaktionstemperatur 60°C.

## Patentansprüche

1. Verfahren zur Herstellung von alkoxylierten, Carboxylgruppen enthaltenden Polymerisaten durch Umsetzung von

EP 0 349 810 B1

(A) Homopolymerisaten von monoethylenisch ungesättigten $C_3$- bis $C_6$-Carbonsäuren oder Copolymerisaten, die

(a) 1 bis 99 Gew.% mindestens einer monoethylenisch ungesättigten $C_3$- bis $C_6$-Monocarbonsäure und

(b) 99 bis 1 Gew.% mindestens einer monoethylenisch ungesättigten $C_4$- bis $C_6$-Dicarbonsäure

mit der Maßgabe einpolymerisiert enthalten, daß die Summe der Angaben (a) und (b) in Gew.% immer 100 beträgt, mit

(B) Ethylenoxid, Propylenoxid, n-Butylenoxid, Isobutylenoxid oder deren Gemischen

in wäßrigem Medium bei Temperaturen bis zu 120°C, dadurch gekennzeichnet, daß man die Umsetzung bei einem pH-Wert von 5,0 bis 5,9 startet und nach Erreichen eines pH-Wertes von 5,5 bis 8,5 beendet.

2. Verfahren nach Anspruch 1, dadurch gekennzeichnet, daß man die Umsetzung von (A) mit (B) in Gegenwart von Thioethern oder SH-Gruppen enthaltenden Verbindungen als Katalysator durchführt.

3. Verfahren nach Anspruch 1 oder 2, dadurch gekennzeichnet, daß man

(A) Copolymerisate, die

(a) 40 bis 90 Gew.% Acrylsäure und/oder Methacrylsäure und

(b) 60 bis 10 Gew.% Maleinsäure und/oder Itaconsäure

einpolymerisiert enthalten, wobei die Summe der Angaben (a) und (b) in Gew.% immer 100 beträgt, mit

(B) 3 bis 80 Gew.% Propylenoxid, bezogen auf (A), in Gegenwart von 0,5 bis 5 Gew.%, bezogen auf Propylenoxid, an Thiodiglykol und/oder Thiodiessigsäure umsetzt.

4. Verfahren nach Anspruch 1 oder 2, dadurch gekennzeichnet, daß der K-Wert der Homo- und Copolymerisate (A) 8 bis 200 beträgt (gemessen nach H. Fikentscher in wäßriger Lösung bei 25°C, pH 7 und einer Konzentration des Na-Salzes der Polymerisate von 1 Gew.%).

5. Verfahren nach Anspruch 1 oder 2, dadurch gekennzeichnet, daß der K-Wert der Homo- und Copolymerisate (A) 15 bis 100 beträgt (gemessen nach H. Fikentscher in wäßriger Lösung bei 25°C, pH 7 und einer Konzentration des Na-Salzes der Polymerisate von 1 Gew.%).

6. Verfahren nach Anspruch 1, dadurch gekennzeichnet, daß der pH-Wert im Verlauf der Umsetzung von (A) mit (B) um mindestens 0,2 Einheiten steigt.

7. Verfahren nach Anspruch 1, dadurch gekennzeichnet, daß der pH-Wert im Verlauf der Umsetzung von (A) mit (B) um mindestens 0,4 Einheiten steigt.

**Claims**

1. A process for the preparation of an oxyalkylated, carboxyl-containing polymer, by reacting

(A) a homopolymer of a monoethylenically unsaturated $C_3$-$C_6$-carboxylic acid or a copolymer which contains, as copolymerized units,

(a) from 1 to 99% by weight of one or more monoethylenically unsaturated $C_3$-$C_6$-monocarboxylic acids, and

(b) from 99 to 1% by weight of one or more monoethylenically unsaturated $C_4$-$C_6$-dicarboxylic acids,

with the proviso that the sum of the percentages by weight (a) and (b) is always 100, with

(B) ethylene oxide, propylene oxide, n-butylene oxide, isobutylene oxide or a mixture of these

in an aqueous medium at not more than 120°C, wherein the reaction is started at a pH of from 5.0 to 5.9 and is ended after a pH of from 5.5 to 8.5 has been reached.

2. A process as claimed in claim 1, wherein the reaction of (A) with (B) is carried out in the presence of a thioether or an SH-containing compound as a catalyst.

3. A process as claimed in claim 1 or 2, wherein

(A) a copolymer which contains, as copolymerized units,

(a) from 40 to 90% by weight of acrylic acid and/or methacrylic acid and

8

(b) from 60 to 10% by weight of maleic acid and/or itaconic acid,
the sum of the percentages by weight (a) and (b) always being 100, is reacted with
(B) from 3 to 80% by weight, based on (A), of propylene oxide in the presence of from 0.5 to 5% by weight, based on propylene oxide, of thiodiglycol and/or thiodiacetic acid.

4. A process as claimed in claim 1 or 2, wherein the K value of the homopolymers and copolymers (A) is from 8 to 200 (measured according to H. Fikentscher in aqueous solution at 25°C, at a pH of 7 and at a concentration of the Na salt of the polymers of 1% by weight).

5. A process as claimed in claim 1 or 2, wherein the K value of the homopolymers and copolymers (A) is from 15 to 100 (measured according to H. Fikentscher in aqueous solution at 25°C, at a pH of 7 and at a concentration of the Na salt of the polymers of 1% by weight).

6. A process as claimed in claim 1, wherein the pH increases by not less than 0.2 unit in the course of the reaction of (A) with (B).

7. A process as claimed in claim 1, wherein the pH increased by not less than 0.4 unit in the course of the reaction of (A) with (B).

## Revendications

1. Procédé de préparation de polymères contenant des radicaux carboxyle, alcoxylés, par la réaction
   (A) d'homopolymères d'acides carboxyliques en $C_3$ à $C_6$, à insaturation monoéthylénique, ou de copolymères qui contiennent, incorporés par polymérisation,
       (a) 1 à 99% en poids d'au moins un acide monocarboxylique en $C_3$ à $C_6$, à insaturation monoéthylénique et
       (b) 99 à 1% en poids d'au moins un acide dicarboxylique en $C_4$ à $C_6$, à insaturation monoéthylénique,
   avec la condition que la somme des données (a) et (b) en pourcent en poids soit toujours égale à 100, avec
   (B) l'oxyde d'éthylène, l'oxyde de propylène, l'oxyde de n-butylène, l'oxyde d'isobutylène, ou leurs mélanges,
   à des températures allant jusqu'à 120°C et en milieu aqueux, caractérisé en ce que l'on amorce la réaction à un pH de 5,0 à 5,9 et on la termine après avoir atteint un pH de 5,5 à 8,5.

2. Procédé suivant la revendication 1, caractérisé en ce que l'on entreprend la réaction de (A) avec (B) en présence de thioéthers ou de composés contenant des radicaux SH à titre de catalyseurs.

3. Procédé suivant la revendication 1 ou 2, caractérisé en ce qu'on fait réagir
   (A) des copolymères qui contiennent, incorporés par polymérisation,
       (a) 40 à 90% en poids d'acide acrylique et/ou d'acide méthacrylique et
       (b) 60 à 10% en poids d'acide maléique et/ou d'acide itaconique,
   où la somme des données (a) et (b) en % en poids est toujours égale à 100, avec
   (B) 3 à 80% en poids d'oxyde de propylène, par rapport à (A), en présence de 0,5 à 5% en poids, par rapport à l'oxyde de propylène, de thiodiglycol et/ou d'acide thiodiacétique.

4. Procédé suivant la revendication 1 ou 2, caractérisé en ce que la valeur K des homopolymères et des copolymères (A) varie de 8 à 200 (telle que mesurée selon H. Fikentscher, en solution aqueuse, à 25°C, à un pH de 7 et à une concentration du sel de sodium des polymères de 1% en poids).

5. Procédé suivant la revendication 1 ou 2, caractérisé en ce que la valeur K des homopolymères ou des copolymères (A) varie de 15 à 100 (telle que mesurée selon H. Fikentscher, en solution aqueuse, à 25°C, à un pH de 7 et à une concentration du sel de sodium des polymères de 1% en poids).

6. Procédé suivant la revendication 1, caractérisé en ce que la valeur du pH augmente d'au moins 0,2 unité au cours du déroulement de la réaction de (A) avec (B).

**7.** Procédé suivant la revendication 1, caractérisé en ce que la valeur du pH augmente d'au moins 0,4 unité au cours du déroulement de la réaction de (A) avec (a).